# EUROPEAN PATENT APPLICATION

(11) **EP 4 807 158 A1**
(43) Date of publication of application: **16.09.2026**
(21) Application number: 26165225.9
(22) Date of filing: 16.03.2026
(51) Int. Cl.: F02C 3/113, F02K 3/06

(54) **AIRCRAFT PROPULSION SYSTEM WITH AUXILIARY DRIVE UNIT**

(30) Priority: 14.03.2025 US 202519079871
(71) Applicant: RTX Corporation, Farmington, CT 06032 (US)
(72) Inventor: HANRAHAN, Paul R., Sedona, 86351 (US); KUPRATIS, Daniel B., Wallingford, 06492 (US)
(74) Representative: Dehns

(57) **Abstract**

An assembly includes an engine core (30), a first propulsor rotor (22), a first power coupler (90) and a drive unit (32). The engine core (30) includes a compressor section (66), a combustor section (67), a turbine section (68), a flowpath (128) extending therethrough and a first rotating structure (88). The first rotating structure (88) includes a first turbine rotor (80) disposed in the turbine section (68). The first power coupler (90) is configured to operatively couple the first rotating structure (88) to the first propulsor rotor (22) during a first mode such that the first rotating structure (88) is configured to drive rotation of the first propulsor rotor (22) through the first power coupler (90). The first power coupler (90) is also configured to operatively decouple the first rotating structure (88) from the first propulsor rotor (22) during a second mode. The drive unit (32) is configured to drive the rotation of the first propulsor rotor (22) during the second mode.

## Description

### Technical Field

This disclosure relates generally to an aircraft and, more particularly, to a propulsion system for the aircraft.

### Background Information

Various types and configurations of aircraft propulsion systems are known in the art, including aircraft propulsion systems with multiple propulsor rotors. While these known aircraft propulsion systems have various benefits, there is still room in the art for improvement.

### SUMMARY

According to an aspect of the present invention, an assembly is provided for an aircraft propulsion system. This assembly includes an engine core, a first propulsor rotor, a first power coupler and a drive unit. The engine core includes a compressor section, a combustor section, a turbine section, a flowpath and a first rotating structure. The flowpath extends through the compressor section, the combustor section and the turbine section. The first rotating structure includes a first turbine rotor disposed in the turbine section. The first power coupler is configured to operatively couple the first rotating structure to the first propulsor rotor during a first mode such that the first rotating structure is configured to drive rotation of the first propulsor rotor through the first power coupler. The first power coupler is also configured to operatively decouple the first rotating structure from the first propulsor rotor during a second mode. The drive unit is configured to drive the rotation of the first propulsor rotor during the second mode.

According to another aspect of the present invention, another assembly is provided for an aircraft propulsion system. This assembly includes an engine core, a drive unit, a first propulsor rotor, a second propulsor rotor and a first clutch. The engine core includes a compressor section, a combustor section, a turbine section, a flowpath and a first rotating structure. The flowpath extends through the compressor section, the combustor section and the turbine section. The first rotating structure includes a first turbine rotor disposed in the turbine section. The drive unit includes an electric machine and/or an air turbine. The first rotating structure is operatively coupled to the first propulsor rotor through the first clutch. The first rotating structure is operatively coupled to the second propulsor rotor independent of the first clutch. The drive unit is operatively coupled to the first propulsor rotor independent of the first clutch.

According to still another aspect of the present invention, another assembly is provided for an aircraft propulsion system. This assembly includes an engine core, a drive unit, a first propulsor rotor, a second propulsor rotor and a first clutch. The engine core includes a compressor section, a combustor section, a turbine section, a flowpath and a first rotating structure. The flowpath extends through the compressor section, the combustor section and the turbine section. The first rotating structure includes a first turbine rotor disposed in the turbine section. The drive unit includes an electric machine and/or an air turbine. The drive unit is operatively coupled to the first propulsor rotor through the first clutch. The first rotating structure is operatively coupled to the first propulsor rotor and the second propulsor rotor independent of the first clutch. The first rotating structure and the first propulsor rotor are configured to rotate at a common rotational speed.

In an embodiment of the above, the drive unit may be configured as or otherwise include an electric machine. This electric machine may be configurable as at least an electric motor during the second mode.

In an embodiment according to any of the previous embodiments, the electric machine may be configurable as an electric generator during the first mode. The first rotating structure may be configured to mechanically power operation of the electric machine during the first mode.

In an embodiment according to any of the previous embodiments, the assembly may also include an air circuit and an airflow inlet into the air circuit. The airflow inlet may be fluidly coupled to the flowpath upstream of a combustor in the combustor section. The drive unit may be configured as or otherwise include an air turbine fluidly coupled inline along the air circuit.

In an embodiment according to any of the previous embodiments, the airflow inlet into the air circuit may be fluidly coupled to a plenum adjacent and upstream of the combustor along the flowpath.

In an embodiment according to any of the previous embodiments, the drive unit may be operatively coupled to the first propulsor rotor independent of the first power coupler.

In an embodiment according to any of the previous embodiments, the assembly may also include a second power coupler configured to operatively couple the drive unit to the first propulsor rotor during the second mode. The second power coupler may be configured to operatively decouple the drive unit from the first propulsor rotor during the first mode.

In an embodiment according to any of the previous embodiments, the second power coupler may be configured as or otherwise include a clutch.

In an embodiment according to any of the previous embodiments, the assembly may also include a sprag clutch operatively coupled between the drive unit and the first propulsor rotor.

In an embodiment according to any of the previous embodiments, the assembly may also include a gear system operatively coupling the drive unit to the first propulsor rotor.

In an embodiment according to any of the previous embodiments, the first power coupler may be configured as or otherwise include a clutch.

In an embodiment according to any of the previous embodiments, the first propulsor rotor may be configured as or otherwise include a ducted propulsor rotor.

In an embodiment according to any of the previous embodiments, the first rotating structure and the first propulsor rotor may be configured to rotate at a common rotational speed during the first mode.

In an embodiment according to any of the previous embodiments, the assembly may also include a second propulsor rotor. The first rotating structure may be configured to drive rotation of the second propulsor rotor during at least the second mode.

In an embodiment according to any of the previous embodiments, the assembly may also include a second power coupler configured to: operatively decouple the first rotating structure from the second propulsor rotor during the first mode; and operatively couple the first rotating structure to the second propulsor rotor during the second mode.

In an embodiment according to any of the previous embodiments, the second propulsor rotor may be configured as or otherwise include an open propulsor rotor.

In an embodiment according to any of the previous embodiments, the second propulsor rotor may be configured as or otherwise include a ducted propulsor rotor.

In an embodiment according to any of the previous embodiments, a rotational axis of the first propulsor rotor may be angularly offset from a rotational axis of the second propulsor rotor by a non-zero angle.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIGS. 2A and 2B are schematic illustrations of a portion of the aircraft propulsion system at a core-to-first propulsor power coupler in various arrangements.
FIGS. 3A and 3B are schematic illustrations of a portion of the aircraft propulsion system at a drive unit-to-first propulsor power coupler in various arrangements.
FIG. 4 is a schematic illustration of a portion of the aircraft propulsion system at a drive unit configured as an air turbine.
FIG. 5 is a schematic illustration of a portion of the aircraft propulsion system at the drive unit configured as an electric machine.
FIG. 6 is a schematic illustration of a portion of the aircraft propulsion system at a gas turbine engine core.
FIG. 7 is a schematic illustration of a portion of the aircraft propulsion system with multiple propulsor rotors for generating propulsive lift.
FIG. 8 is a partial schematic illustration of the aircraft propulsion system with a geartrain.
FIG. 9 is a schematic illustration of a portion of the aircraft propulsion system with the geartrain.

### DETAILED DESCRIPTION

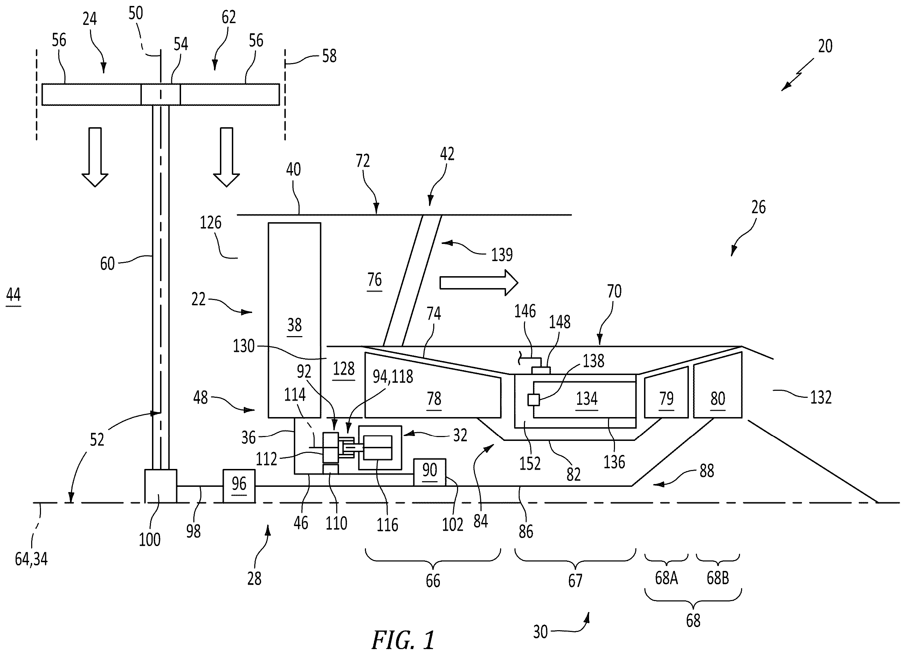

FIG. 1 schematically illustrates a propulsion system 20 for an aircraft. The aircraft may be an airplane, a rotorcraft (e.g., a helicopter), a drone (e.g., an unmanned aerial vehicle (UAV)), a spacecraft or any other manned or unmanned aerial vehicle or system. This aircraft may be configured as a vertical take-off and landing (VTOL) aircraft and/or a short take-off and vertical landing (STOVL) aircraft. The aircraft propulsion system 20 of FIG. 1, for example, is configured to generate power for first direction propulsion (e.g., propulsive thrust) during a first mode of operation and to generate power for second direction propulsion (e.g., propulsive lift) during a second mode of operation, where the first direction is different than (e.g., angularly offset from) the second direction. The first operating mode may be a horizontal flight mode (e.g., a forward flight mode) where the first direction propulsion is substantially horizontal propulsive thrust; e.g., within five degrees (5°), ten degrees (10°), twenty degrees (20°), etc. of a horizontal axis. The second operating mode may be a vertical flight and/or hover mode where the second direction propulsion is substantially vertical propulsive lift; e.g., within five degrees (5°), ten degrees (10°), etc. of a vertical axis. The aircraft propulsion system 20, of course, may also be configured to generate both the first direction propulsion (e.g., horizontal propulsion) and the second direction propulsion (e.g., vertical propulsion) during a third mode of operation; e.g., a transition mode from the first operating mode to the second operating mode and/or from the second operating mode to the first operating mode.

The aircraft propulsion system 20 of FIG. 1 includes one or more bladed propulsor rotors 22 and 24, a gas turbine engine 26 and a drivetrain 28. Briefly, a core 30 of the turbine engine 26 is configured to mechanically power and rotationally drive the first propulsor rotor 22 and/or the second propulsor rotor 24 through the drivetrain 28. The aircraft propulsion system 20 of FIG. 1 also includes an auxiliary drive unit 32 also configured to mechanically power and rotationally drive the first propulsor rotor 22.

The first propulsor rotor 22 is rotatable about a first propulsor axis 34. This first propulsor axis 34 is an axial centerline of the first propulsor rotor 22 and may be horizontal when the aircraft is on ground and/or during substantially level aircraft flight. The first propulsor rotor 22 includes a first propulsor base 36 (e.g., a disk or a hub) and a plurality of first propulsor blades 38 (one visible in FIG. 1; e.g., airfoils, vanes, etc.). The first propulsor blades 38 are arranged and may be equispaced circumferentially about the first propulsor base 36 in an annular array. Each of these first propulsor blades 38 is connected to the first propulsor base 36. Each of the first propulsor blades 38 projects spanwise (e.g., radially away from the first propulsor axis 34) out from the first propulsor base 36 to a distal tip of the respective first propulsor blade 38.

The first propulsor rotor 22 of FIG. 1 is configured as a ducted propulsor rotor such as a fan rotor. The first propulsor rotor 22 of FIG. 1, for example, is housed within an outer case 40 (e.g., a fan case) of a propulsion system housing 42. The present disclosure, however, is not limited to such an exemplary first propulsor rotor configuration. For example, the first propulsor rotor 22 may alternatively be configured as an open propulsor rotor (e.g., an un-ducted propulsor rotor) where its first propulsor blades 38 are disposed in and exposed to an environment 44 external to the aircraft propulsion system 20 and, more generally, the aircraft.

The first propulsor rotor 22 is connected to a first propulsor shaft 46. At least (or only) the first propulsor rotor 22 and the first propulsor shaft 46 collectively form a first propulsor rotating structure 48. This first propulsor rotating structure 48 and its members 22 and 46 are rotatable about the first propulsor axis 34.

The second propulsor rotor 24 is rotatable about a second propulsor axis 50. This second propulsor axis 50 is an axial centerline of the second propulsor rotor 24 and may be vertical (or acutely angled) when the aircraft is on the ground and/or during substantially level aircraft flight. The second propulsor axis 50 may thereby be angularly offset from the first propulsor axis 34 by an included angle 52; e.g., a right angle or a non-zero acute angle. This included angle 52 may be between sixty degrees (60°) and ninety degrees (90°), inclusive; however, the present disclosure is not limited to such an exemplary relationship. The second propulsor rotor 24 includes a second propulsor base 54 (e.g., a disk or a hub) and a plurality of second propulsor blades 56 (e.g., airfoils, vanes, etc.). The second propulsor blades 56 are arranged and may be equispaced circumferentially about the second propulsor base 54 in an annular array. Each of these second propulsor blades 56 is connected to the second propulsor base 54. Each of the second propulsor blades 56 projects spanwise (e.g., radially away from the second propulsor axis 50) out from the second propulsor base 54 to a distal tip of the respective second propulsor blade 56.

The second propulsor rotor 24 may be configured as a ducted propulsor rotor such as a fan rotor, where the second propulsor rotor 24 is housed within a shroud 58. Alternatively, the second propulsor rotor 24 may be configured as an open propulsor rotor (e.g., an un-ducted propulsor rotor) where its second propulsor blades 56 are disposed in and exposed to the external environment 44.

The second propulsor rotor 24 is connected to a second propulsor shaft 60. At least (or only) the second propulsor rotor 24 and the second propulsor shaft 60 collectively form a second propulsor rotating structure 62. This second propulsor rotating structure 62 and its members 24 and 60 are rotatable about the second propulsor axis 50.

The engine core 30 extends axially along a core axis 64. This core axis 64 is an axial centerline of the engine core 30 and may be horizontal when the aircraft is on the ground and/or during level aircraft flight. This core axis 64 may be parallel (e.g., coaxial) with the first propulsor axis 34 and, thus, angularly offset from the second propulsor axis 50. The engine core 30 of FIG. 1 includes a compressor section 66, a combustor section 67 and a turbine section 68. The turbine section 68 of FIG. 1 includes a high pressure turbine (HPT) section 68A and a low pressure turbine (LPT) section 68B; e.g., a power turbine (PT) section.

The engine sections 66-68B may be arranged sequentially along the core axis 64 within the propulsion system housing 42. The propulsion system housing 42 of FIG. 1, for example, includes an inner housing structure 70 and an outer housing structure 72. An inner case 74 (e.g., a core case) of the inner housing structure 70 houses the engine core 30 and its engine sections 66-68B. The outer housing structure 72 includes the outer case 40 that houses the first propulsor rotor 22 of FIG. 1. The outer housing structure 72 is also radially spaced outward from, axially overlaps and extends circumferentially about (e.g., substantially or completely around) the inner housing structure 70. With this arrangement, the inner housing structure 70 and the outer housing structure 72 may collectively form a bypass flowpath 76 (e.g., an annular bypass flowpath) radially between the inner housing structure 70 and the outer housing structure 72. The inner housing structure 70 may form a radial inner peripheral boundary of the bypass flowpath 76. The outer housing structure 72 may form a radial outer peripheral boundary of the bypass flowpath 76. This bypass flowpath 76 extends outside of and thereby bypasses the engine core 30 and its engine sections 66-68B.

The compressor section 66 includes a bladed compressor rotor 78. The HPT section 68A includes a bladed high pressure turbine (HPT) rotor 79. The LPT section 68B includes a bladed low pressure turbine (LPT) rotor 80; e.g., a power turbine (PT) rotor. Each of these engine rotors 78-80 includes a rotor base (e.g., a disk or a hub) and a plurality of rotor blades (e.g., airfoils, vanes, etc.). The rotor blades may be arranged into one or more stages axially along the respective engine rotor. The rotor blades in each stage are arranged and may be equispaced circumferentially around the respective rotor base in an annular array. Each of the rotor blades is connected to the respective rotor base. Each of the rotor blades projects spanwise (e.g., radially away from the core axis 64) out from the respective rotor base to a distal tip of the respective rotor blade.

The compressor rotor 78 is connected to the HPT rotor 79 through a high speed shaft 82. At least (or only) the compressor rotor 78, the HPT rotor 79 and the high speed shaft 82 collectively form a high speed rotating structure 84; e.g., a high speed spool of the turbine engine 26 and its engine core 30. This high speed rotating structure 84 of FIG. 1 and its members 78, 79 and 82 are rotatable about the core axis 64.

The LPT rotor 80 is connected to a low speed shaft 86. At least (or only) the LPT rotor 80 and the low speed shaft 86 collectively form a low speed rotating structure 88; e.g., a low speed spool of the turbine engine 26 and its engine core 30. This low speed rotating structure 88 of FIG. 1 and its members 80 and 86 are rotatable about the core axis 64. The low speed rotating structure 88 and, more particularly, its low speed shaft 86 may also project axially through a bore of the high speed rotating structure 84 and its high speed shaft 82.

The drivetrain 28 is configured to selectively operatively couple the low speed rotating structure 88 and its LPT rotor 80 to (a) the first propulsor rotating structure 48 and its first propulsor rotor 22 and/or (b) the second propulsor rotating structure 62 and its second propulsor rotor 24. The drivetrain 28 is also configured to selectively operatively couple the drive unit 32 to the first propulsor rotating structure 48 and its first propulsor rotor 22. For example, a first leg of the drivetrain 28 of FIG. 1 includes a core-to-first propulsor (CFP) power coupler 90, a drive unit-to-first propulsor (DUFP) gear system 92 and a drive unit-to-first propulsor (DUFP) power coupler 94. A second leg of the drivetrain 28 of FIG. 1 includes a core-to-second propulsor (CSP) power coupler 96, a core-to-second propulsor (CSP) driveshaft 98 and a core-to-second propulsor (CSP) gear system 100. This second leg of the drivetrain 28 may be operationally independent of the first leg of the drivetrain 28, and the first leg of the drivetrain 28 may be operationally independent of the second leg of the drivetrain 28.

The CFP power coupler 90 is configured to operatively couple the low speed rotating structure 88 and its low speed shaft 86 to the first propulsor rotating structure 48 and its first propulsor shaft 46 during the first operating mode and the third operating mode. The CFP power coupler 90 is further configured to operatively decouple the low speed rotating structure 88 and its low speed shaft 86 from the first propulsor rotating structure 48 and its first propulsor shaft 46 during the second operating mode. The CFP power coupler 90 of FIG. 1, for example, may be configured as or otherwise include a clutch 102 such as a multi-disk clutch.

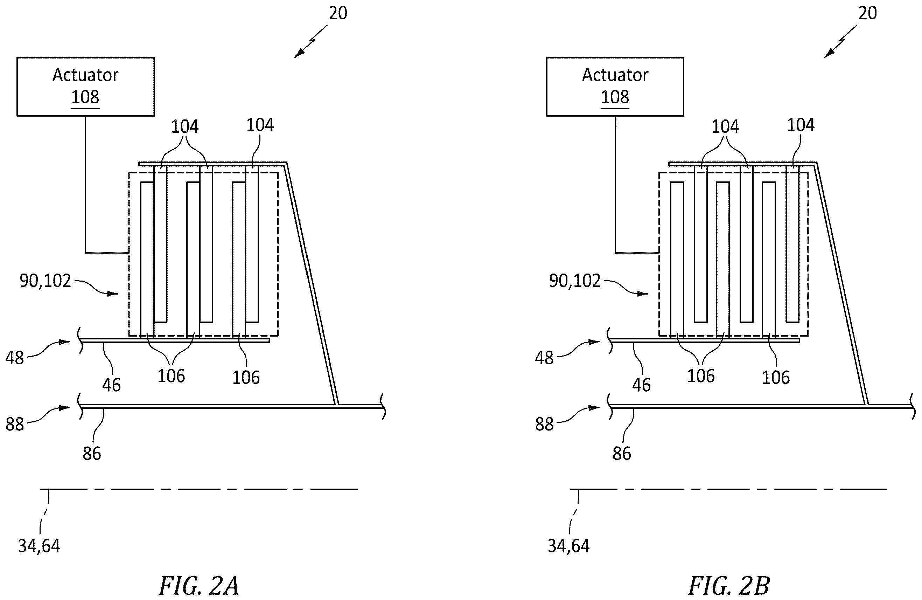

Referring to FIGS. 2A and 2B, the CFP power coupler clutch 102 may include one or more first clutch plates 104, one or more second clutch plates 106 and an actuator 108. The first clutch plates 104 are mounted and rotatable with the low speed rotating structure 88 and its low speed shaft 86. The second clutch plates 106 are mounted and rotatable with the first propulsor rotating structure 48 and its first propulsor shaft 46. The actuator 108 is configured to selectively move (e.g., axially translate) the first clutch plates 104 and/or the second clutch plates 106 along the core axis 64 between an engaged arrangement (e.g., see FIG. 2A) and a disengaged arrangement (e.g., see FIG. 2B). **In** the engaged arrangement of FIG. 2A, each first clutch plate 104 axially contacts a respective one (or more) of the second clutch plates 106, and vice versa. This frictional contact between the first clutch plates 104 and the second clutch plates 106 rotationally couples the first clutch plates 104 and the second clutch plates 106 together. The low speed rotating structure 88 may thereby drive rotation of the first propulsor rotating structure 48 through the CFP power coupler clutch 102 during the first operating mode and the third operating mode. By contrast, in the disengaged arrangement of FIG. 2B, each first clutch plate 104 may be axially spaced from a respective one (or more) of the second clutch plates 106, and vice versa. The first clutch plates 104 and the low speed rotating structure 88 may thereby be rotationally decoupled from the second clutch plates 106 and the first propulsor rotating structure 48. The present disclosure, however, is not limited to such an exemplary CFP power coupler. The CFP power coupler 90, for example, may alternatively be configured as or otherwise include a splined lock, where one splined or toothed member may be moved (e.g., axially translated) to selectively engage (e.g., mesh) with or disengage (e.g., separate) from another splined or toothed member.

Referring to FIG. 1, the DUFP gear system 92 is configured to operatively couple the DUFP power coupler 94 to the first propulsor rotating structure 48 and its first propulsor shaft 46. The DUFP gear system 92 of FIG. 1, for example, includes an inner gear 110 and an outer gear 112. The inner gear 110 is mounted to and circumscribes the first propulsor rotating structure 48 and its first propulsor shaft 46. This inner gear 110 is thereby rotatable with the first propulsor rotating structure 48 and its first propulsor shaft 46 about the first propulsor axis 34. The outer gear 112 is disposed radially outboard of the inner gear 110. The outer gear 112 is engaged (e.g., meshed) with the inner gear 110. This outer gear 112 is rotatable about a drive unit axis 114 which may (or may not) be parallel with, but radially offset from, the first propulsor axis 34.

The DUFP power coupler 94 is configured to operatively couple a rotor 116 of the drive unit 32 to the first propulsor rotating structure 48 and its first propulsor shaft 46 during the second operating mode and, optionally, the third operating mode. The DUFP power coupler 94 is further configured to operatively decouple the drive unit rotor 116 from the first propulsor rotating structure 48 and its first propulsor shaft 46 during the first operating mode. The DUFP power coupler 94 of FIG. 1, for example, may be configured as or otherwise include a clutch 118 such as a sprag clutch or another type of passively actuated clutch.

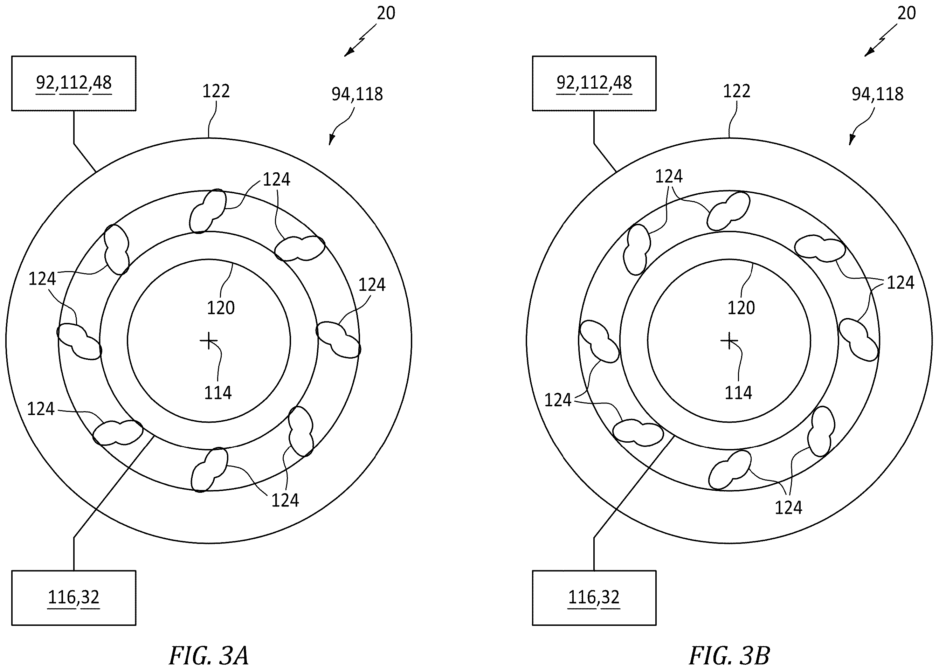

Referring to FIGS. 3A and 3B, the DUFP power coupler clutch 118 includes a clutch inner member 120, a clutch outer member 122 and one or more clutch sprags 124. The clutch inner member 120 is connected to and rotatable with the drive unit rotor 116. The clutch outer member 122 is connected to and rotatable with the DUFP gear system 92 and its outer gear 112. The clutch outer member 122 is disposed radially outboard of and radially spaced from the clutch inner member 120. The clutch outer member 122 extends circumferentially about (e.g., circumscribes) the clutch inner member 120 and an array of the clutch sprags 124. The clutch sprags 124 are arranged circumferentially about the clutch inner member 120 in the array; e.g., an annular array. This array of the clutch sprags 124 is arranged within an annular gap formed by and radially between the clutch inner member 120 and the clutch outer member 122. Each of these clutch sprags 124 is movable (e.g., pivotable) between an engaged position (e.g., see FIG. 3A) and a disengaged position (e.g., see FIG. 3B). Each clutch sprag 124 may also be biased (e.g., spring biased) to move towards its engaged position.

In the engaged position of FIG. 3A, each clutch sprag 124 engages (e.g., contacts) a (e.g., cylindrical) outer surface of the clutch inner member 120 and a (e.g., cylindrical) inner surface of the clutch outer member 122. When the clutch inner member 120 rotates faster than the clutch outer member 122, the engagement between the outer surface of the clutch inner member 120 and each clutch sprag 124 may cause that clutch sprag 124 to move (e.g., pivot counterclockwise in FIG. 3A) into and remain in the engaged position of FIG. 3A, where the clutch sprags 124 are jammed between the clutch inner member 120 and the clutch outer member 122. These jammed clutch sprags 124 rotationally couple / lock the clutch inner member 120 to the clutch outer member 122.

In the disengaged position of FIG. 3B, each clutch sprag 124 may still engage (e.g., contact) the outer surface of the clutch inner member 120 and the inner surface of the clutch outer member 122; e.g., due to the spring bias. However, when the clutch inner member 120 rotates slower than the clutch outer member 122 (or the clutch inner member 120 is stationary), the engagement between the inner surface of the clutch outer member 122 and each clutch sprag 124 may cause that clutch sprag 124 to move (e.g., pivot clockwise in FIG. 3B) into and remain in the disengaged position of FIG. 3B, where the clutch sprags 124 slide along (e.g., skip along) the outer surface of the clutch inner member 120 and the inner surface of the clutch outer member 122. The clutch inner member 120 is thereby rotationally disengaged from the clutch outer member 122.

Referring to FIG. 1, the CSP power coupler 96 is configured to operatively couple the low speed rotating structure 88 and its low speed shaft 86 to the CSP driveshaft 98 during the second operating mode and the third operating mode. The CSP power coupler 96 is further configured to operatively decouple the low speed rotating structure 88 and its low speed shaft 86 from the CSP driveshaft 98 during the first operating mode. The CSP power coupler 96 of FIG. 1, for example, may be configured as or otherwise include a clutch such as a multi-disk clutch. The present disclosure, however, is not limited to such an exemplary CSP power coupler. The CSP power coupler 96, for example, may alternatively be configured as or otherwise include a splined lock or another disengageable mechanical power coupling.

The CSP gear system 100 is configured to operatively couple the CSP driveshaft 98 to the second propulsor rotating structure 62 and its second propulsor shaft 60. The CSP gear system 100 may also provide a speed change mechanism between the CSP driveshaft 98 and the second propulsor shaft 60. The CSP gear system 100, however, may alternatively provide a 1:1 rotational coupling between the CSP driveshaft 98 and the second propulsor shaft 60 such that these shafts 60 and 98 rotate at a common (e.g., the same) rotational velocity. An example of the CSP gear system 100 is an angle gearbox.

During operation of the aircraft propulsion system 20 of FIG. 1, ambient air from the external environment 44 enters the aircraft propulsion system 20 and its turbine engine 26 through an airflow inlet 126. An inner stream of the air flows across (and may be propelled by) the first propulsor rotor 22 in a downstream, aft direction into a core flowpath 128; e.g., an annular core flowpath. This core flowpath 128 extends sequentially through the compressor section 66, the combustor section 67, the HPT section 68A and the LPT section 68B from an airflow inlet 130 into the engine core 30 and its core flowpath 128 to a combustion products exhaust 132 from the engine core 30 and its core flowpath 128.

The air entering the engine core 30 and its core flowpath 128 through the core inlet 130 may be referred to as "core air". This core air is compressed by the compressor rotor 78 and directed into a combustion chamber 134 (e.g., an annular combustion chamber) of a combustor 136 (e.g., an annular combustor) in the combustor section 67. Fuel is injected into the combustion chamber 134 through one or more fuel injectors 138 (one visible in FIG. 1) and mixed with the compressed core air to provide a fuel-air mixture. This fuel-air mixture is ignited and combustion products thereof flow through and sequentially drive rotation of the HPT rotor 79 and the LPT rotor 80. The rotation of the HPT rotor 79 drives rotation of the high speed rotating structure 84 and its compressor rotor 78. The rotation of the LPT rotor 80 drives rotation of the low speed rotating structure 88. The rotation of the low speed rotating structure 88 may drive rotation of the first propulsor rotor 22 through the first leg of the drivetrain 28 during the first operating mode and the third operating mode. The rotation of the low speed rotating structure 88 may drive rotation of the second propulsor rotor 24 through the second leg of the drivetrain 28 during the second operating mode and the third operating mode. During the first operating mode, the second propulsor rotor 24 is operably decoupled from the low speed rotating structure 88. The second propulsor rotor 24 may thereby be stationary (or windmill) during the first operating mode.

During the first operating mode, the low speed rotating structure 88 may provide substantially all of its mechanical power (e.g., minus losses) to the first propulsor rotating structure 48 through the first leg of the drivetrain 28 to drive the rotation of the first propulsor rotor 22. Here, the low speed rotating structure 88 and the first propulsor rotating structure 48 may rotate at a common (the same) rotational speed. This rotation of the first propulsor rotor 22 propels the inner stream of the air into the core flowpath 128. The rotation of the first propulsor rotor 22 also propels an outer stream of the air (bypass air) through the bypass flowpath 76 to provide the first direction propulsion; e.g., the forward, horizontal thrust. Here, a guide vane structure 139 (e.g., a fan exit guide vane (FEGV) structure) may be arranged in the bypass flowpath 76 downstream of the first propulsor rotor 22 to condition (e.g., straighten, de-swirl) the outer stream of the air to enhance thrust. During this first operating mode, the low speed rotating structure 88 is operatively decoupled from the second propulsor rotating structure 62. The low speed rotating structure 88 thereby provides substantially no mechanical power to the second propulsor rotating structure 62. By contrast, during the second operating mode, the low speed rotating structure 88 may provide substantially all of its mechanical power (e.g., minus losses) to the second propulsor rotating structure 62 through the second leg of the drivetrain 28 to drive the rotation of the second propulsor rotor 24. This rotation of the second propulsor rotor 24 propels additional air (separate from the core air and the bypass air) to provide the second direction propulsion; e.g., vertical lift. During this second operating mode, the low speed rotating structure 88 is operatively decoupled from the first propulsor rotating structure 48. The low speed rotating structure 88 thereby provides substantially no mechanical power to the first propulsor rotating structure 48. However, to maintain a positive flow of the air across the first propulsor rotor 22 and into the core flowpath 128, the drive unit 32 may be operated to provide mechanical power to and thereby drive rotation of the first propulsor rotating structure 48 and its first propulsor rotor 22 during the second operating mode. Continuing the rotation of the first propulsor rotating structure 48 (although slower than during the first operating mode) may also prevent or reduce likelihood of damaging bearing(s) supporting the first propulsor rotating structure 48 and its first propulsor shaft 46. Here, the flow of the bypass air directed through the bypass flowpath 76 during the second operating mode may be *de minimis* and, thus, may provide little to no first direction propulsion.

With the arrangement of FIG. 1, during the first operating mode, the low speed rotating structure 88 is operatively coupled to the first propulsor rotating structure 48 independent of the drivetrain first leg members 92 and 94. Similarly, during the second operating mode, the drive unit 32 is operatively coupled to the first propulsor rotating structure 48 independent of the CFP power coupler 90.

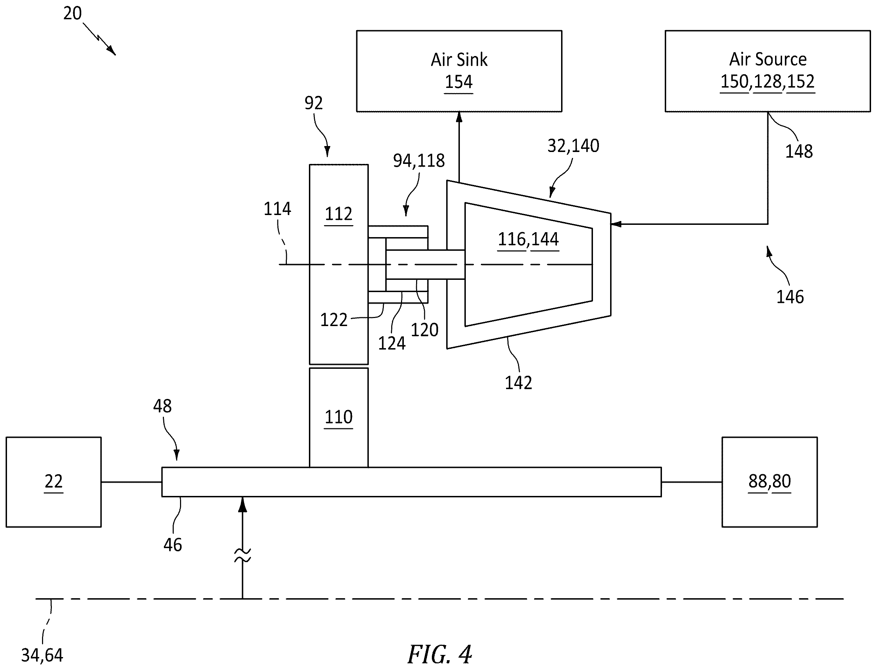

Referring to FIG. 4, the drive unit 32 may be configured as or otherwise include an air turbine 140. This air turbine 140 includes an air turbine housing 142 (e.g., a case) and a bladed air turbine rotor 144 disposed within an interior of the air turbine housing 142. Here, the air turbine rotor 144 forms the drive unit rotor 116. The air turbine rotor 144 is thereby connected to and rotatable with the clutch inner member 120; see also FIGS. 3A and 3B. The air turbine 140 is fluidly coupled inline along an air circuit 146. An airflow inlet 148 into this air circuit 146 is fluidly coupled to an air source 150 such as the core flowpath 128. Referring to FIG. 1, the circuit inlet 148 may be fluidly coupled to the core flowpath 128 upstream of the combustor 136. The circuit inlet 148 of FIG. 1, for example, is fluidly coupled to a diffuser plenum 152 that is adjacent and surrounds the combustor 136, upstream of the combustor 136 along the core flowpath 128. With this arrangement, referring again to FIG. 4, the air circuit 146 may direct pressurized air received (e.g., bled) from the core flowpath 128 into the air turbine 140. This pressurized air is directed and expanded across the air turbine rotor 144, thereby driving rotation of the air turbine rotor 144 about the drive unit axis 114. The rotating air turbine rotor 144 may, in turn, drive the rotation of the first propulsor rotor 22 during at least (or only) the second operating mode. The air circuit 146 may subsequently exhaust the air into an air sink 154 such as the bypass flowpath 76 (see FIG. 1), another volume (e.g., passage, flowpath, compartment, etc.) within the aircraft propulsion system 20, the external environment 44 (see FIG. 1), etc. The present disclosure, however, is not limited to such an exemplary arrangement. For example, it is contemplated the circuit inlet 148 may be disposed along the compressor section 66 of FIG. 1.

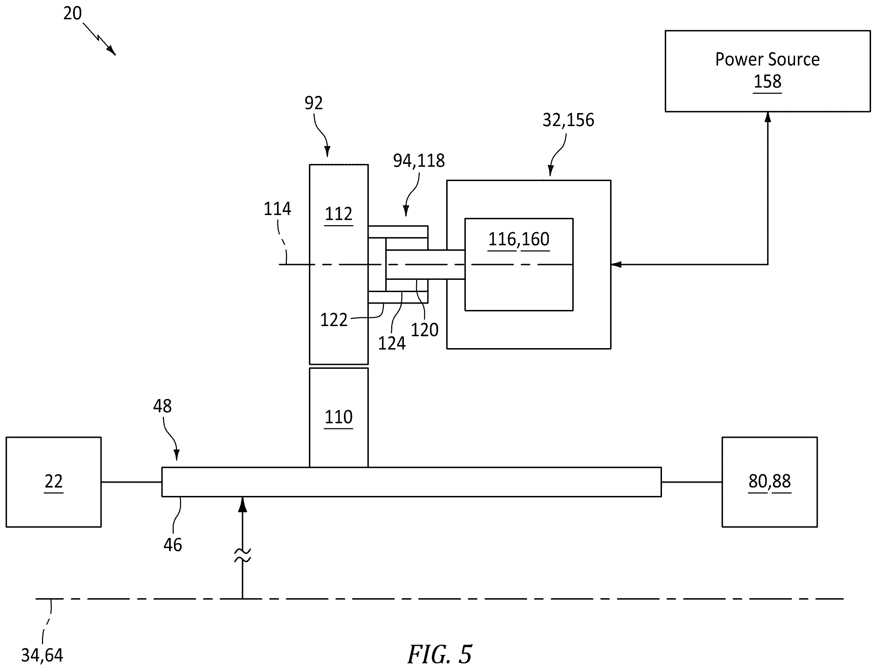

Referring to FIG. 5, the drive unit 32 may be configured as or otherwise include an electric machine 156 electrically coupled to an electrical power source 158; e.g., a power storage such as a battery or a battery bank, an electric generator, an electrical power bus, etc. With such an arrangement, the electrical power source 158 may provide electricity to the electric machine 156 during the second mode, and the electric machine 156 may be operated as an electric motor. While operated as the electric motor, the drive unit rotor 116 - an electric machine rotor 160 of the electric machine 156 - may drive the rotation of the first propulsor rotor 22. In some embodiments, the electric machine 156 may be configured as a dedicated electric motor. In other embodiments, the electric machine 156 may also be configurable as an electric generator. In such embodiments, it is contemplated the DUFP power coupler 94 may be omitted (or actively actuated) such that the drive unit rotor 116 may remain coupled to the first propulsor rotating structure 48 during the first operating mode under certain conditions. The low speed rotating structure 88 may thereby drive rotation of the drive unit rotor 116 in addition to driving the rotation of the first propulsor rotor 22. When operating as the electric generator, the electric machine 156 may provide its generated electricity back into the electrical power source 158 for storage or further use.

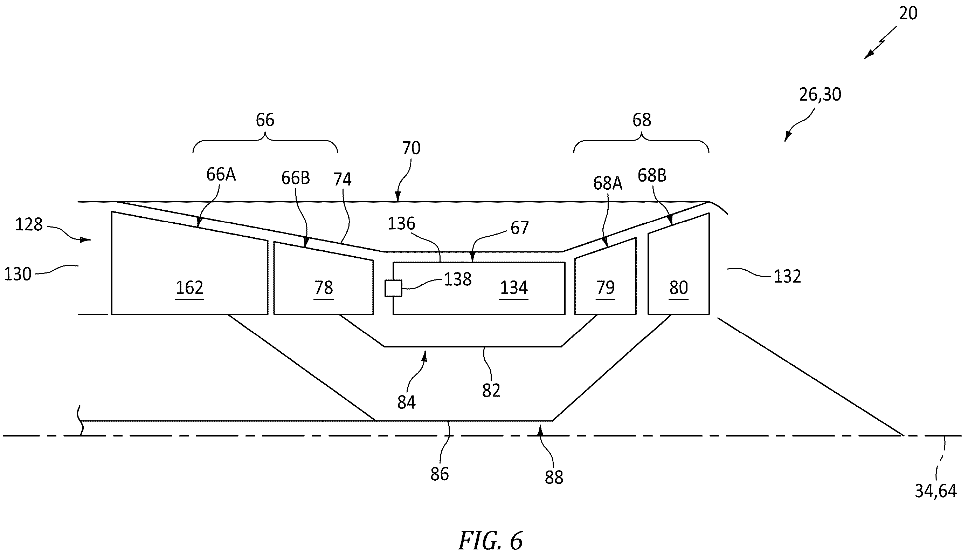

In some embodiments, referring to FIG. 1, the low speed rotating structure 88 may be configured without a compressor rotor. In other embodiments, referring to FIG. 6, the low speed rotating structure 88 may include a low pressure compressor (LPC) rotor 162 arranged within a low pressure compressor (LPC) section 66A of the compressor section 66. In such embodiments, the compressor rotor 78 may be a high pressure compressor (HPC) rotor within a high pressure compressor (HPC) section 66B of the compressor section 66.

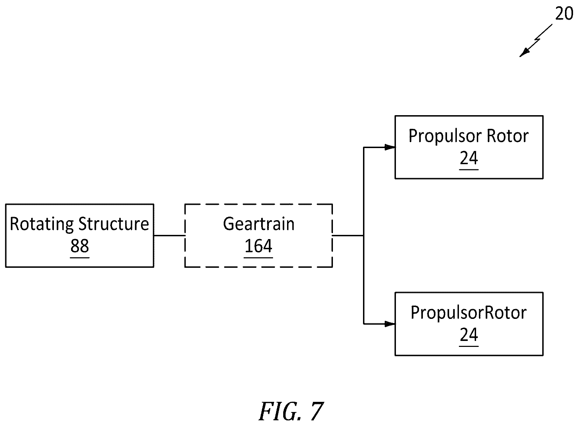

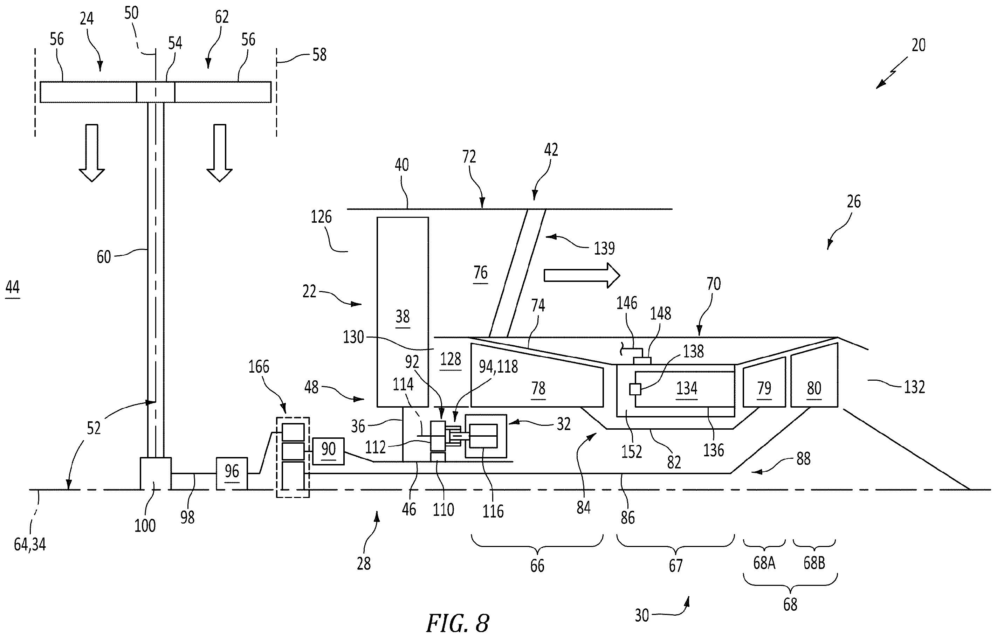

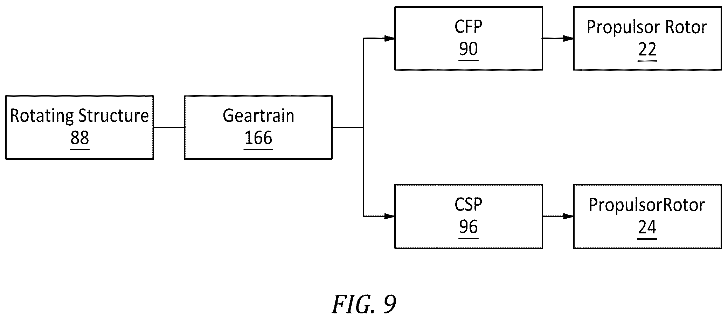

The engine core 30 (e.g., see FIG. 1) may have various configurations other than those described above. The engine core 30, for example, may be configured with a single spool, with two spools (e.g., see FIGS. 1 and 6), or with more than two spools. The engine core 30 may be configured with one or more axial flow compressor sections, one or more radial flow compressor sections, one or more axial flow turbine sections and/or one or more radial flow turbine sections. The engine core 30 may be configured with any type or configuration of annular, tubular (e.g., CAN), axial flow and/or reverser flow combustor. The present disclosure therefore is not limited to any particular types or configurations of gas turbine engine cores. Furthermore, it is contemplated the engine core 30 of the present disclosure may drive more than the two propulsor rotors 22 and/or 24, or a single one of the propulsor rotors 22, 24 and/or one or more other mechanical loads; e.g., electric machines, electric generators, electric motors, etc. The aircraft propulsion system 20, for example, may include two or more of the first propulsor rotors 22 and/or two or more of the second propulsor rotors 24. For example, the aircraft propulsion system 20 of FIG. 7 includes multiple second propulsor rotors 24 rotatably driven by the low speed rotating structure 88. These second propulsor rotors 24 may rotate about a common axis. Alternatively, each second propulsor rotor 24 may rotate about a discrete axis where, for example, the second propulsor rotors 24 are laterally spaced from one another and coupled to the low speed rotating structure 88 through an optional power splitting geartrain 164. Still alternatively, referring to FIGS. 8 and 9, a geartrain 166 (e.g., a transmission, a speed change device, an epicyclic geartrain, etc.) may be disposed between and may operatively couple the first propulsor rotor 22 and/or the second propulsor rotor 24 to the low speed rotating structure 88 and its LPT rotor 80.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (20), comprising:
an engine core (30) including a compressor section (66), a combustor section (67), a turbine section (68), a flowpath (128) and a first rotating structure (88), the flowpath (128) extending through the compressor section (66), the combustor section (67) and the turbine section (68), and the first rotating structure (88) comprising a first turbine rotor (80) disposed in the turbine section (68);
a first propulsor rotor (22);
a first power coupler (90) configured to operatively couple the first rotating structure (88) to the first propulsor rotor (22) during a first mode such that the first rotating structure (88) is configured to drive rotation of the first propulsor rotor (22) through the first power coupler, and the first power coupler (90) further configured to operatively decouple the first rotating structure (88) from the first propulsor rotor (22) during a second mode; and
a drive unit (32) configured to drive the rotation of the first propulsor (22) rotor during the second mode.

2. The assembly of claim 1, wherein the drive unit (32) comprises an electric machine (156) configurable as at least an electric motor during the second mode.

3. The assembly of claim 2, wherein
the electric machine (156) is configurable as an electric generator during the first mode; and
the first rotating structure (88) is configured to mechanically power operation of the electric machine (156) during the first mode.

4. The assembly of claim 1, 2 or 3, further comprising:
an air circuit (146);
an airflow inlet (148) into the air circuit (146) fluidly coupled to the flowpath (128) upstream of a combustor (136) in the combustor section (67); and
the drive unit (32) comprising an air turbine (140) fluidly coupled inline along the air circuit (146),
wherein, optionally, the airflow inlet (148) into the air circuit (146) is fluidly coupled to a plenum (152) adjacent and upstream of the combustor (67) along the flowpath (128).

5. The assembly of any preceding claim, wherein the drive unit (32) is operatively coupled to the first propulsor rotor (22) independent of the first power coupler (90).

6. The assembly of any preceding claim, further comprising:
a second power coupler (94) configured to operatively couple the drive unit (32) to the first propulsor rotor (22) during the second mode; and
the second power coupler (94) configured to operatively decouple the drive unit (32) from the first propulsor rotor (22) during the first mode,
wherein, optionally, the second power coupler (94) comprises a clutch (118).

7. The assembly of any preceding claim, further comprising a sprag clutch (124) operatively coupled between the drive unit (32) and the first propulsor rotor (22).

8. The assembly of any preceding claim, further comprising a gear system (92) operatively coupling the drive unit (32) to the first propulsor rotor (22).

9. The assembly of any preceding claim, wherein the first power coupler (90) comprises a clutch (102).

10. The assembly of any preceding claim, wherein the first propulsor rotor (22) comprises a ducted propulsor rotor.

11. The assembly of any preceding claim, wherein the first rotating structure (88) and the first propulsor rotor (22) are configured to rotate at a common rotational speed during the first mode.

12. The assembly of any preceding claim, further comprising:
a second propulsor rotor (24);
the first rotating structure (88) configured to drive rotation of the second propulsor rotor (240) during at least the second mode.

13. The assembly of claim 12, further comprising a second power coupler configured to
operatively decouple the first rotating structure (88) from the second propulsor rotor (24) during the first mode; and
operatively couple the first rotating structure (88) to the second propulsor rotor (24) during the second mode.

14. The assembly of claim 12 or 13, wherein the second propulsor rotor (24) comprises an open propulsor rotor or a ducted propulsor rotor.

15. The assembly of claim 12, 13 or 14, wherein a rotational axis (34) of the first propulsor rotor (22) is angularly offset from a rotational axis (50) of the second propulsor rotor (24) by a non-zero angle.
